# EUROPÄISCHE PATENTANMELDUNG

(11) **EP 1 241 672 A2**
(43) Veröffentlichungstag der Anmeldung: **18.09.2002**
(21) Anmeldenummer: 02002332.1
(22) Anmeldetag: 31.01.2002
(51) Int. Cl.: G11B 23/40, G11B 5/78, B65H 75/28, B65D 85/672, G09F 3/00

(54) **Identifikationsetikett zur Kennzeichnung von auf Kernen gewickelten streifen- oder bandförmigen Medien**

(30) Priorität: 15.03.2001 DE 20104430 U
(71) Anmelder: EMTEC Magnetics GmbH, 67059 Ludwigshafen (DE)
(72) Erfinder: Scholtysik, Bernd, Dr., 81825 München (DE)

(57) **Zusammenfassung**

Identifikationsetikett zur Kennzeichnung von auf Kernen gewickelten streifenoder bandförmigen Medien, insbesondere bandförmigen magnetischen Datenaufzeichnungsträgern zu sogenannten Rohwickeln, wobei das Etikett Angaben zur Produktbezeichnung, zum Produktionscode und zur Qualitätsangabe umfasst und wobei auch die Lage der von einem Sensor erfassten Fehler des streifen- oder bandförmigen Mediums vermerkt ist.

## Beschreibung

Die Neuerung betrifft ein Identifikationsetikett zur Kennzeichnung von auf Kernen gewickelten streifen- oder bandförmigen Medien, insbesondere bandförmigen magnetischen Datenaufzeichnungsträgern.

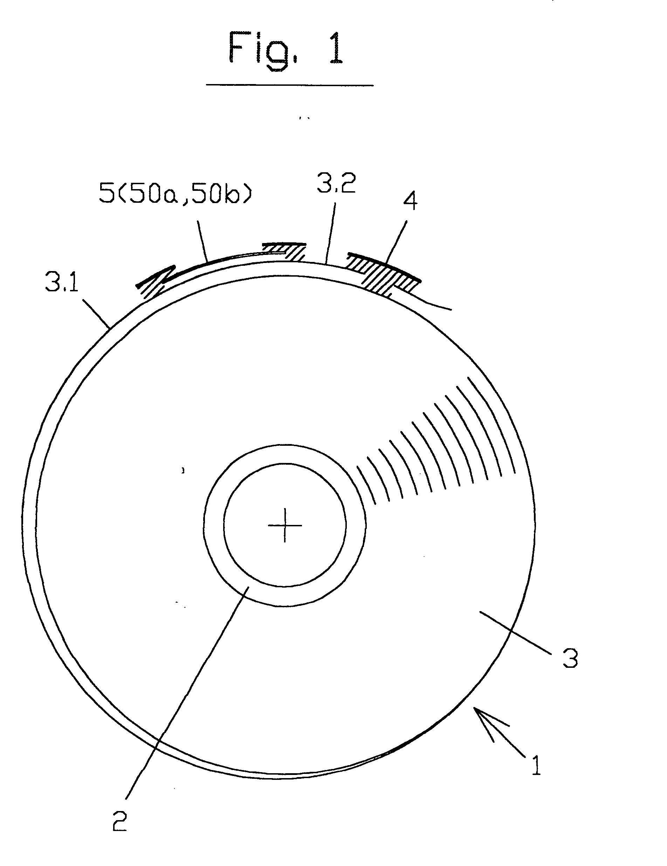

Wie in Fig. 1 dargestellt, werden auf Gebrauchsbreite geschnittene, streifenoder bandförmige Medien, insbesondere magnetische Datenaufzeichnungsträger (3) zur Weiterverarbeitung auf Kerne (2) zu sogenannten Rohwickeln (1) aufgewickelt, wobei die Länge der streifen- oder bandförmigen Medien mehrere tausend Meter beträgt und wobei jeder Rohwickel (1) einen Verschlußklebestreifen (4) und ein Identifikationsetikett (5) aufweist.

Sowohl Verschlußklebestreifen (4) als auch Identifikationsetikett (5) sind auf der äußersten Lage (3.1) des Rohwickels (1) durch Aufkleben angebracht, wobei der Verschlußklebestreifen (4) das freie Ende (3.2) des bandförmigen magnetischen Datenaufzeichnungsträgers (3) an der äußersten Lage (3.1) des Rohwickels (1) fixiert und diesen somit verschließt. Sowohl die Breite des Verschlußklebestreifens (4) als auch die des Identifikationsetiketts (5) entspricht im allgemeinen der Gebrauchsbreite des magnetischen Datenaufzeichnungsträgers, wie beispielsweise ½" beim VHS System.

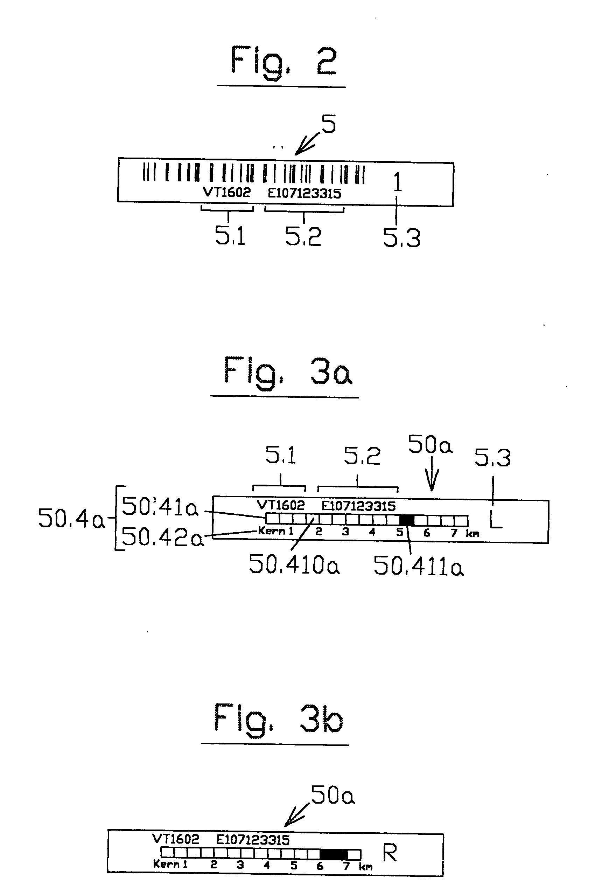

Wie aus Fig. 2 ersichtlich, enthält das Identifikationsetikett (5) in der Regel die Produktbezeichnung (5.1), einen Produktionscode (5.2) und je nach Hersteller eine Qualitätsklassifizierung (5.3) des Rohwickels (1). Diese Daten sind als Klartext und/oder Barcode auf das Identifikationsetikett (5) aufgedruckt.

Die Qualitätsklassifizierung basiert im wesentlichen auf kontinuierlichem Erfassen von bildwirksamen Fehlern des bandförmigen magnetischen Datenaufzeichnungsträgers, wie beispielsweise sogenannte Dropouts, die mittels Sensoren während des Schneidvorgangs eines Halbfabriks zu Einzelbändern in Gebrauchsbreite erfolgt, wobei jedem Einzelband mindestens ein Sensor zugeordnet ist. Unter Halbfabrikat ist ein mit magnetischer Dispersion beschichtetes folienförmiges Trägermaterial zu verstehen, wobei sowohl dessen Breite und Länge ein Vielfaches der Breite und Länge des zum Rohwickel (1) aufgewickelten magnetischen Datenaufzeichnungsträgers beträgt.

Die Längenpositionen auf dem Band der von einem Sensor erfaßten bildwirksamen Fehler werden in einem Computer gespeichert und können am Ende eines jeden Schneidvorgangs abgerufen und ausgedruckt werden.

Je nach Menge der von einem Sensor erfaßten Fehler ergeben sich unterschiedliche Qualitätsklassifizierungen für die Rohwickel (1). Rohwickel mit einigen wenigen Fehlern werden als sogenanntes "B-Grade" bezeichnet und in den Handel gebracht. Die Weiterverarbeitung eines mit dem üblichen Identifikationsetikett (5) versehenen Rohwickels ist jedoch mit erhöhtem Aufwand verbunden, da das Identifikationsetikett (5) nur Auskunft über die Qualitätsklassifizierung des Rohwickels, nicht jedoch über die Lage der von einem Sensor erkannten bildwirksamen Fehler gibt. Folglich müssen die fehlerbehafteten Bereiche erst mittels geeigneter Prüfeinrichtungen wieder aufgefunden und dann von der weiteren Verarbeitung ausgeschlossen werden.

Es bestand daher die Aufgabe ein Identifikationsetikett bereitzustellen, welches diesen Nachteil überwindet und ein einfaches Auffinden der Lage der von einem Sensor erkannten bildwirksamen Fehler ermöglicht.

Die Aufgabe wurde gelöst mit einem Identifikationsetikett zur Kennzeichnung von auf Kernen aufgewickelten streifen- oder bandförmigen Medien, insbesondere bandförmigen magnetischen Datenaufzeichnungsträgern, wobei zusätzlich zur bisherigen Angabe von Produktbezeichnung, Produktionscode und Qualitätsangabe auch die Lage der von einem Sensor erfaßten Fehler des streifen- oder bandförmigen Mediums vermerkt ist.

Die Neuerung wird nachfolgend unter Bezugnahme auf die Zeichnungen beschrieben und zwar zeigt:
- Fig. 1: einen Rohwickel aus bandförmigem magnetischem Datenaufzeichnungsträger
- Fig. 2: ein herkömmliches Identifikationsetikett
- Fig. 3a: eine erste Ausführung eines neuerungsgemäßen Identifikationsetiketts
- Fig. 3b bis: Identifikationsetiketten entsprechend Fig. 3a, jedoch mit unterschiedlichen Angaben zur Lage der von einem Sensor erfaßten Fehler
Fig. 3d

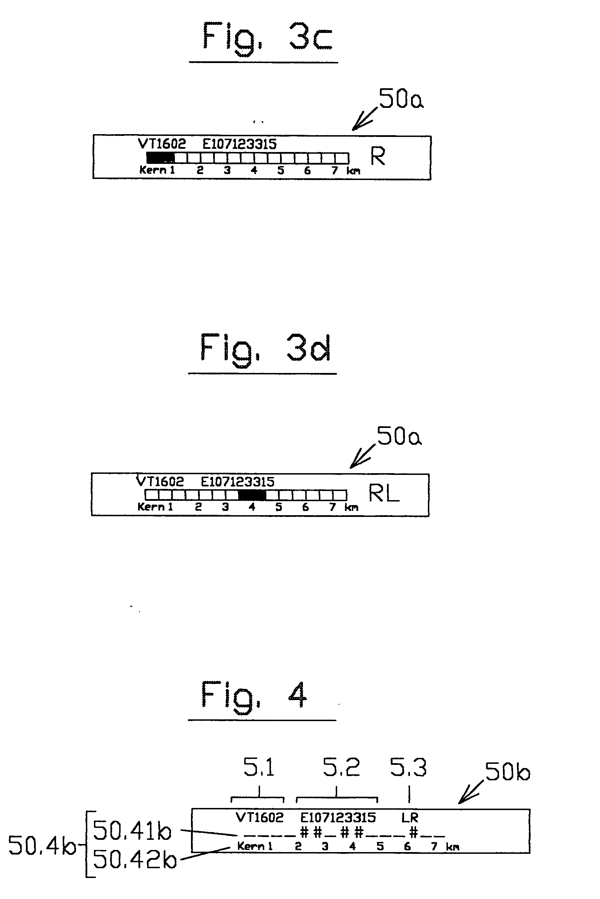

- Fig. 4: eine zweite Ausführung eines neuerungsgemäßen Identifikationsetiketts

Eine erste Ausführung eines neuerungsgemäßen Identifikationsetiketts (50a) mit Kennzeichnung der Lage der von einem Sensor erfaßten Fehler ist in Fig. 3a dargestellt. In der ersten Zeile ist die Produktbezeichnung (5.1) und der Produktionscode (5.2) aufgedruckt, während die zweite Zeile eine grafische Darstellung (50.4a) der Rohwickellänge samt zugehöriger Skalierung enthält, welche die Lage der von einem Sensor erfaßten Fehler erkennbar macht. Im Randbereich des Identifikationsetiketts (50a) ist die Qualitätsklassifizierung (5.3) angebracht ist.

Die grafische Darstellung (50.4a) der Rohwickellänge besteht bei dieser Ausführung aus einem Maßbalken (50.41a), der aus einer Aneinanderreihung von quadratischen oder rechteckigen Markierungsfeldern (50.410a) gebildet ist, wobei jedes Markierungsfeld (50.410a) einen Längenbereich des Rohwickels (1) definiert und einer dem Maßbalken angebrachten Skalierung (50.42a), wobei die Skalierung unter einem ersten Markierungsfeld mit dem Wort "Kern" (entspricht dem Bandanfang am Wickelkern) beginnt und sich mit einer Zahlenreihe, welche die Länge des aufgewickelten magnetischen Datenaufzeichnungsträgers (3) angibt, fortsetzt und schließlich mit Angabe der Längeneinheit endet. In der in Fig. 3a dargestellten Ausführung definiert jedes Markierungsfeld (50.410a) einen Bereich von 500m Länge. Somit beginnt die Zahlenreihe der Skalierung unter dem zweiten Markierungsfeld mit der Zahl "1" und setzt sich dergestalt fort, dass unter jedem übernächsten Markierungsfeld eine Zahl steht, die um den Wert "1" bezüglich der vorhergehenden Zahl erhöht ist.

Diese Anordnung ermöglicht es, Sensorfehler innerhalb von 500 m Bereichen zu markieren. Die Kennzeichnung (50.411a) der Lage der von einem Sensor erfaßten Fehler erfolgt durch Markierung des entsprechenden quadratischen oder rechteckigen Markierungsfeldes (50.410a). Die Markierung kann beispielsweise durch Schwärzen des entsprechenden Markierungsfeldes oder durch Anbringen eines beliebigen Symbols im Markierungsfeld erfolgen.

Grundsätzlich kann die Darstellung des Maßbalkens (50.41a) und der Skalierung (50.42a) auch auf kleinere Bereiche als 500m abgestimmt sein, wobei die Bereichsuntergrenze durch die Lesbarkeit bzw. Zuordnung und Anzahl der Informationen pro Bereich begrenzt ist.

Das in Fig. 3a dargestellte Identifikationsetikett (50a) charakterisiert somit einen Rohwickel mit ca. 7 500m Länge und mit von einem Sensor erfaßten Fehlern im Bereich zwischen 5 000m und 5 500m. Wie außerdem erkennbar, ist bei diesem Etikett der Aufdruck der Produktbezeichnung (5.1) und der Produktionscode (5.2) nur noch im Klartext vorhanden. Dies resultiert daraus, dass "B-Grade"-Rohwickel im internen Produktionsbereich des Herstellers im allgemeinen nicht weiterverarbeitet werden und somit der Barcodeaufdruck entfallen kann.

Das in Fig. 3b dargestellte Identifikationsetikett (50a) charakterisiert einen Rohwickel von ca. 7 500m Länge und mit von einem Sensor erfaßten Fehlern im Bereich von 6 000m bis 7 000m.

Das in Fig. 3c dargestellte Identifikationsetikett (50a) charakterisiert einen Rohwickel von ca. 7 500 m Länge und mit von einem Sensor erfaßten Fehlern im Bereich zwischen Kern (2) und 1 000m.

Das in Fig. 3d dargestellte Identifikationsetikett (50a) charakterisiert einen Rohwickel von ca. 7 500 m Länge und mit von einem Sensor erfaßten Fehlern im Bereich zwischen 3 500m und 4 500m.

Eine weitere bevorzugte Ausführung eines neuerungsgemäßen Identifikationsetiketts (50b) ist in Fig. 4 dargestellt. Dieses Etikett entspricht bezüglich Produktbezeichnung (5.1), Produktionscode (5.2) und Qualitätsklassifizierung (5.3) im wesentlichen der zuvor beschriebenen Ausführung, wobei die Qualitätsklassifizierung (5.3) in der erste Zeile des Etiketts angebracht ist.

Für die grafische Darstellung (50.4b) der Rohwickellänge in der zweiten Zeile des Identifikationsetiketts (50b) sind hier einfache Symbole, wie sie rationell mittels Nadel- oder Thermotransferdruck auf das Identifikationsetikett (50b) aufbringbar sind, ausgewählt. Beispielsweise ist der Maßbalken (50.41b) durch eine gestrichelte Linie stilisiert, wobei jeder einzelne Strich wiederum einem definierten Längenbereich entspricht. Die Skalierung (50.42b) ist analog der Skalierung (50.42a) des zuvor beschriebenen Ausführungsbeispiels nach Fig. 3a angebracht. Die Lage eines von einem Sensor erfaßten Fehlers ist dadurch angezeigt, dass der Strich, der einem mit Sensorfehlern behafteten Längenbereich zugeordnet ist, durch ein anders beliebiges Symbol, wie beispielsweise "#" oder "X" ersetzt ist.

Das in Fig. 4 dargestellte Identifikationsetikett (50b) charakterisiert somit einen Rohwickel von 7 500m Länge und mit von einem Sensor erfaßten Fehlern im Bereich zwischen 2 000m und 3 000m, im Bereich zwischen 3 500m und 4 500m und im Bereich zwischen 6 000m und 6 500m.

Bei bandförmigen magnetischen Datenaufzeichnungsträgern mit einer geringeren Breite als ½" können die Angaben über Produktbezeichnung (5.1), Produktionscode (5.2), Qualitätsklassifizierung (5.3) und die grafische Darstellung (50.4a) der Rohwickellänge einzeilig auf dem Identifikationsetikett (50a, 50b) angebracht sein (nicht dargestellt).

Die Qualitätsklassifizierung (5.3) ist im allgemeinen verschlüsselt, wobei beispielsweise die in Fig. 2 angegebene Qualitätsklassifizierung "1" einen fehlerfreien Rohwickel (1) charakterisiert, während die Qualitätsklassifizierungen "L", R", und "LR" unterschiedlichen Fehlerarten zugeordnet sind.

Das Identifikationsetikett (50a, 50b) kann aus Papier oder Kunststofffolie bestehen, wobei es mittels Klebestreifen auf dem magnetischen Datenaufzeichnungsträger befestigbar oder auch als selbstklebendes Etikett herstellbar ist.

Durch die Verwendung des neuerungsgemäßen Identifikationsetiketts (50a, 50b) ist es bei der Weiterverarbeitung von Rohwickeln (1) mit fehlerbehafteten Bereichen möglich, auf zusätzliche Prüfeinrichtungen zum Wiederauffinden der fehlerhaften Bereiche zu verzichten und den gekennzeichneten Bereich aus dem Rohwickel (1) herauszuschneiden.

Die Anwendung der zuvor beschriebenen Neuerung ist nicht auf Rohwickel aus bandförmigen magnetischen Datenaufzeichnungsträgern beschränkt, sondern ist auch vorteilhaft bei allen andern, mit Funktionsschichten versehenen, streifen- oder bandförmigen Medien anwendbar.

## Patentansprüche

1. Identifikationsetikett (50a, 50b) zur Kennzeichnung von auf Kernen (2) gewickelten streifen- oder bandförmigen Medien, insbesondere bandförmigen magnetischen Datenaufzeichnungsträgern (3) zu sogenannten Rohwickeln (1), wobei das Etikett (50a, 50b) Angaben zur Produktbezeichnung (5.1), zum Produktionscode (5.2) und zur Qualitätsangabe (5.3) umfaßt, **dadurch gekennzeichnet, dass** auch die Lage der von einem Sensor erfaßten Fehler des streifen- oder bandförmigen Mediums vermerkt ist.

2. Identifikationsetikett (50a, 50b) nach Anspruch 1, **dadurch gekennzeichnet, dass** die Lage der von einem Sensor erfaßten Fehler mittels einer auf das Etikett aufgedruckten grafischen Darstellung (50.4a, 50.4b) der Rohwickellänge erkennbar ist.

3. Identifikationsetikett (50a) nach Anspruch 2, **dadurch gekennzeichnet, dass** die grafische Darstellung (50.4a) der Rohwickellänge aus einem Maßbalken (50.41a), gebildet aus einer Aneinanderreihung von quadratischen oder rechteckigen Markierungsfeldern (50.410a) und einer Skalierung (50.42a) besteht, wobei jedes Markierungsfeld einen Längenbereich des Rohwickels (1) definiert.

4. Identifikationsetikett (50a) nach Anspruch 2 und 3, **dadurch gekennzeichnet, dass** die Angabe der Lage der von einem Sensor erfaßten Fehler durch Kennzeichnung (50.411a) des entsprechenden quadratischen oder rechteckigen Markierungsfelds (50.410a) erfolgt.

5. Identifikationsetikett (50b) nach Anspruch 2, **dadurch gekennzeichnet, dass** die grafische Darstellung (50.4b) der Rohwickellänge aus einem Maßbalken (50.41b), stilisiert durch eine gestrichelte Linie und einer Skalierung (50.42b) besteht, wobei jeder einzelne Strich einen Längenbereich des Rohwickels (1) definiert.

6. Identifikationsetikett (50b) nach Anspruch 5, **dadurch gekennzeichnet, dass** die Lage eines von einem Sensor erfaßten Fehlers durch Ersetzen des Strichs, der einem fehlerbehafteten Längenbereich zugeordnet ist, mit einem anderen beliebigen Symbol, erkennbar ist.
